# EUROPEAN PATENT SPECIFICATION

(11) **EP 3 681 658 B1**
(45) Date of publication and mention of the grant of the patent: **10.11.2021**
(21) Application number: 18773641.8
(22) Date of filing: 11.09.2018
(51) Int. Cl.: B23B 13/10, B23B 13/02, B23Q 7/00, B23Q 7/10

(54) **MOVABLE MAGAZINE DEVICE FOR BAR LOADERS**
BEWEGLICHE MAGAZINVORRICHTUNG FÜR STANGENLADER
DISPOSITIF DE MAGASIN MOBILE POUR CHARGEURS DE BARRES

(30) Priority: 12.09.2017 IT 201700102071
(43) Date of publication of application: 22.07.2020
(73) Proprietor: Cucchi Giovanni & C. S.r.l., 20060 Bussero (IT)
(72) Inventor: CUCCHI, Cesare, 20060 Bussero (IT)
(74) Representative: Candito, Rocco
(86) International application number: PCT/IB2018/056909
(87) International publication number: WO 2019/053586

(56) References cited:
- EP-A1- 2 172 287
- EP-A1- 2 368 818
- WO-A2-2016/087574
- DE-A1- 3 440 172

## Description

### BACKGROUND OF THE INVENTION

The present invention relates to a magazine device for periodically supplying with bars one or more loaders for an automatic lathe or for other machine tools.

### PRIOR ART

It is known that the automatic lathes for machining metal bars are fed by suitable feeding apparatuses with the bars to be machined, which are known as bar loaders, provided with drums, guide devices and pushers or equivalent mechanisms that are suitable for making the aforesaid bars advance progressively to the respective lathe.

A bar loader is known from EP2172287 and a magazine for a bar loader according to the preamble of claim 1 is known from EP2368818.

The bar loaders and the magazines for loaders indicated above, need in turn to be supplied with an appropriate number of bars sufficient to ensure a certain machining continuity for the lathe. The bars, stocked in suitable zones of a workshop or in a magazine of a factory, can be moved manually by two or more dedicated operators. Obviously, such manual operations can be significantly burdensome, uncomfortable and above all hazardous for operators. Further, if more than one loaders are to be supplied, clear limits exist that are connected to the manual transporting capacity.

Other known systems supply bar loaders by resorting to a overhead crane or crane system that remove a considerable bundle of bars from the magazine to transfer the bundle from above to a storage space of the bar loader to be filled. This operation requires the upper part of the bar loader to be opened, the bundle of bars supported by the overhead crane or crane to be lowered, and the slinging or grasping systems to be released that hold the bundle of bars. Such operations, also taking into account the enormous weight of the bundle of bars to be transferred, are thus, in addition to be inconvenient to perform, rather dangerous for operators; accidental release or breakage of the slinging or grasping systems would mean a fall from a height of the bars with possible very serious consequences for the operators located in the vicinity. Increasingly strict safety regulations and growing company awareness of the problems of quality in work environments mean that all the known systems disclosed above are not able to meet the need to increase safety levels for operators present in the aforesaid workshops or factories.

### OBJECTS OF THE INVENTION

One object of the present invention is to improve the current systems for supplying bar loaders.

Another object is to provide a solution that permits rapid and easy supplying of the bar loaders in total safety for operators.

Another object of the present invention is to provide a movable magazine device of universal type, i.e. that is able to supply any type of bar loader, also two bar loaders simultaneously if desired, in this manner reducing the general costs of the plants.

A further object is to provide a movable magazine device that has a very simplified structural configuration, thus financially advantageous manufacturing and maintenance costs.

### SHORT DESCRIPTION OF THE INVENTION

These and further objects and advantages are achievable by a movable magazine device as defined in claim 1.

According to the invention, a movable magazine device with the features of claim 1 is provided that is suitable for supplying a bar loader for a user machine.

Owing to the invention, the aforesaid drawbacks are overcome.

Further features and advantages will be clear from the appended claims and description.

### SHORT DESCRIPTION OF THE DRAWINGS

The invention can be better understood and implemented with reference to the attached drawings, which illustrate some embodiments thereof by way of nonlimiting example, in which:

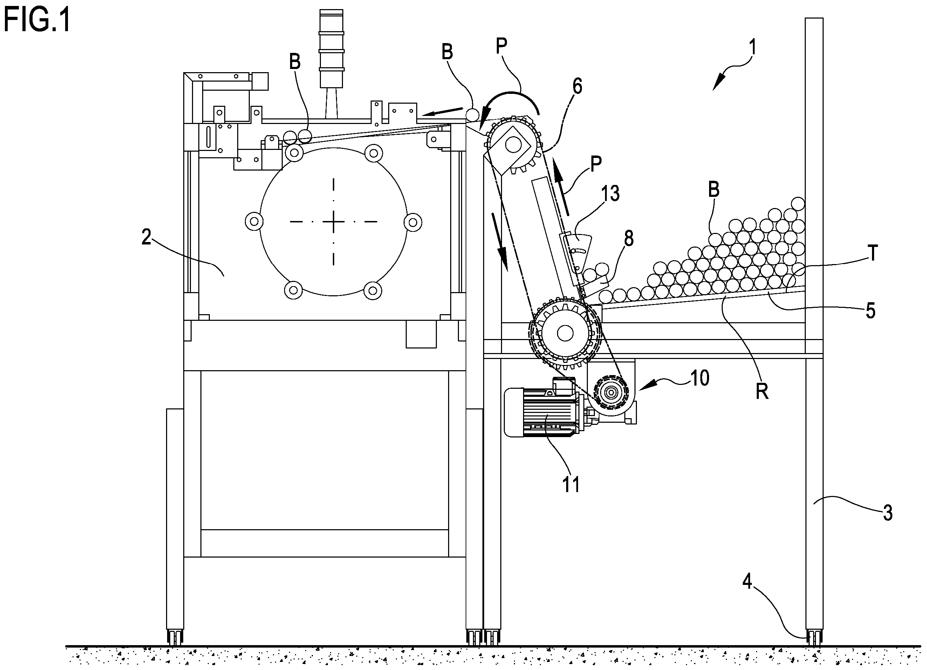

Figure 1 is a front view of a first embodiment of the device according to the invention;
Figure 2 is a side view of the device of Figure 1;
Figures 3 to 6 show operating steps of removing and transferring means included in the magazine device according to the invention;
Figure 7 shows another embodiment of the device according to the invention;
Figure 8 shows a further embodiment of the device according to the invention, configured for simultaneously supplying two distinct bar loaders.

### DETAILED DESCRIPTION OF THE INVENTION

With reference to the attached Figures, a magazine device 1 of movable type is shown that is usable for supplying, with bars B of any diameter, a bar loader 2 for a machine tool, such as for example an automatic lathe.

Two different possible embodiments will be disclosed of the magazine device: a first magazine device embodiment 1 configured for being able to supply just one bar loader 2, and a second device embodiment 101 configured for being able to supply simultaneously two distinct bar loaders 2A, 2B.

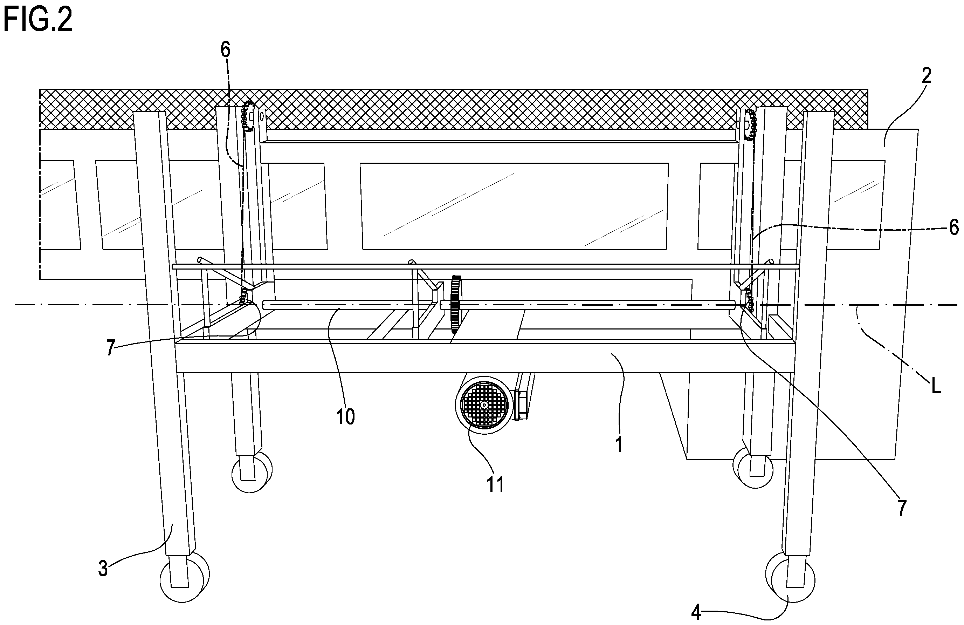

With reference to Figures 2 to 6 relating to a first embodiment, the magazine device 1 has a carriage structure provided with movement means 4. More precisely, the magazine device 1 comprises a frame structure 3 provided with swivel wheels 4, by means of which the moveable magazine device 1 can be pushed manually towards/away from the bar loader 2 during the operations of procuring and transferring the bars B.

Owing to the swivel wheels 4, the magazine device 1 can be moved freely in any direction on the floor of a manufacturing shed or industrial building. In other words, the magazine device 1 is not constrained to having to run along rails or tracks that greatly limit the degree of manoeuvre, as unfortunately is the case with magazine for bars of the prior art previously described above.

The swivel wheels 4 thus advantageously give great agility and versatility to the magazine device 1 according to the present invention.

On the frame structure 3, breaking means is provided to lock the swivel wheels 4 and maintain the magazine device 1 in a stationary and stable position during operation.

In one possible version, it is possible to make a magazine device 1 of self-propelling type, i.e. with movement means assisted by motor means to facilitate movement thereof by an operator.

The magazine device 1 comprises support means 5 obtained on the frame structure 3 and configured for supporting a plurality of bars B intended to be transferred to the aforesaid bar loader 2. In one embodiment, the support means consists of several transverse elements T distributed and arranged transversely to a longitudinal axis L of the frame structure 3. The transverse elements T define a tilted resting plane R that is suitable for receiving a bundle of bars B. The transverse elements T are tilted in a manner descending to a side zone of the frame structure 3 where each bar B can be removed by suitable removing and transferring means 6 (disclosed below) to be transferred to the bar loader 2.

The position of the support means 5 is adjustable. In particular, the lying plane of the transverse elements T, in other words the tilt of the transverse elements T, is adjustable, according to the specific needs and geometry of the bars B.

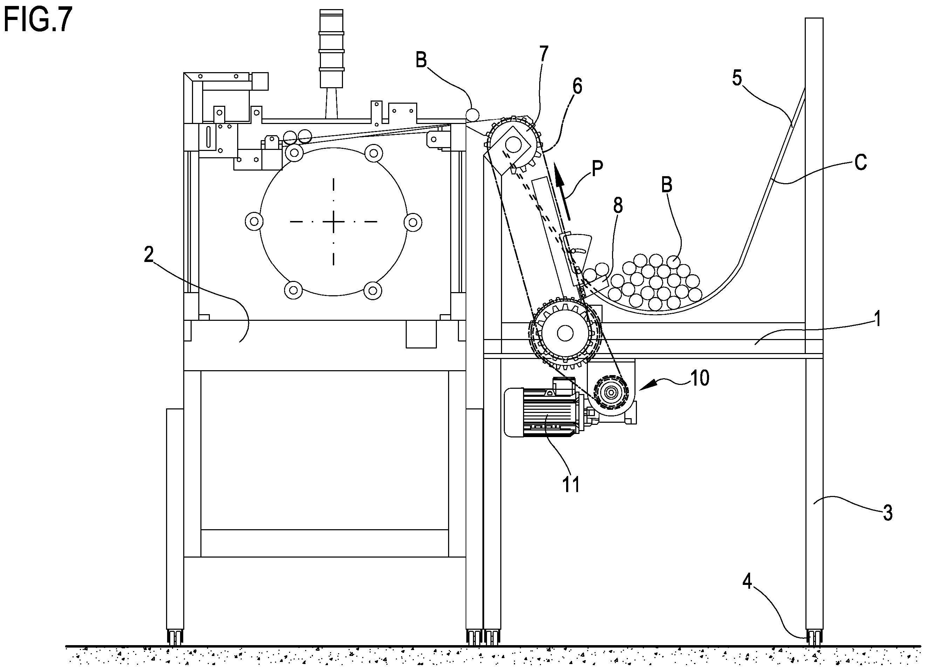

According to one version of the magazine device 1, as shown in Figure 7, the support means 5 consists of chain elements C or belt elements placed at two opposite ends of the frame structure 3.

The end portions of the chain elements C are fixed to respective top zones placed on opposite longitudinal sides of the frame structure 3 according to a catenary curve configuration to act as resting elements for the ends of a bundle of bars B.

The magazine device 1 comprises removing and transferring means 6 fitted to the frame structure 3 and movable along a closed loop P to remove from the support means 5 (i.e. the transverse elements T or chain elements C) single bars B in sequence to be lifted and transferred one after the other to the bar loader 2.

The removing and transferring means comprises at least one closed-loop removing unit 6; more precisely, each removing unit 6 comprises a closed-loop and wound flexible element, at opposite ends to respective circular drive elements.

In the embodiment disclosed and shown here two removing units 6 are provided comprising removing chain units 9 placed at opposite ends of the frame structure to be able to grasp at least two distal zones of each bar B.

Each closed-loop removing unit 6 advances along the respective closed path P that extends on a vertical plane.

Each chain unit 9 is wound, at opposite ends, around respective circular drive elements 7, in particular toothed wheels 7, one of which is connected to a transmission shaft 10. The toothed wheel 7 connected to the transmission shaft 10 receives from the latter the rotation motion generated by an electric motor 11 that drives the transmission shaft 10.

To each removing chain unit 6, engaging protruding elements 8 are fitted that are movable together with the respective chain units 6, and are suitable for making contact below with a bar B to lift the bar B to a delivery height at which the bar B can be transferred to the bar loader 2.

Each removing unit 6, rather than being defined by a chain unit, can alternatively be defined by a belt unit and the circular drive elements 7 can consist of a corresponding pair of pulleys around which the belt unit is wound. Also in this case, one of the pulleys is drivable by an electric motor 11 by the transmission shaft 10.

The protruding elements 8 are shaped as block or plate elements and are fixed in a distributed manner along each closed-loop removing unit 6 (of the chain and/or belt type).

Each protruding element 8 comprises a resting surface 12 that is suitable for receiving and supporting a bar B; the resting surface 12 is tilted with respect to the chain 6 so as to attract the bar B resting on the latter, preventing an accidental fall thereof.

The movable magazine device 1 is further provided with adjusting means 13 to adapt the removing and transferring means 6 to the diameter or section of the bars that have to be supplied each time to the loader 2.

The adjusting means comprises one or more adjusting plates 13, each having a circular sector shape and being connected to the frame structure 3 by a first screw 16 and a second screw 16'. In particular, in the embodiments shown and disclosed here, an adjusting plate 13 is provided on each of the two opposite ends of the frame structure 3.

Each adjusting plate 13 is provided laterally with a contrasting surface 14 shaped for being positioned transversely to the advancement path of the removing and transferring chain units (or belts) 6. The contrasting surface 14, placing itself as an obstacle element, acts to expel - from the protruding elements 8 of the removing and transferring means 6 which moves upwards ― possible excess bars loaded.

On each adjusting plate 13 a slot 15 is obtained, having an arch shape, in which the first screw 16 engages that is connected to the frame structure 3. The second screw 16' connects further, in another zone, the adjusting plate 13 to the frame structure 3.

Before starting up the magazine device 1, it is possible to suitably rotate the adjusting plate 13 around the axis of the second screw 16', by sliding the arch-shaped slot 15 with respect to the previously loosened first screw 16, so as to impose a desired position of the adjusting plate 13. In other words, the adjusting plate 13 is so positionable that the contrasting surface 14 thereof protrudes in a tilted manner by a desired quantity with respect to the path of the removing and transferring chain units 6, in function of the diameter of the bars B to be transferred. For example, in the case of bars with a very small diameter, thus a diameter that is smaller than the length of the protruding part of the protruding elements 8, appropriate adjusting of the adjusting plate 13 ensures the expulsion of the excess bars from the protruding elements 8, and means that only one bar B at a time is lifted to the loader 2, whereas the excess bars loaded are pushed back to the resting plane R of the magazine device 1. If the diameter of the bars is approximately the same as the protruding dimension of the protruding element 8, it will be sufficient to rotate the plate element 13 so that the contrasting surface 14 thereof is not an obstacle to the upward advancement of the bars B along the closed path P.

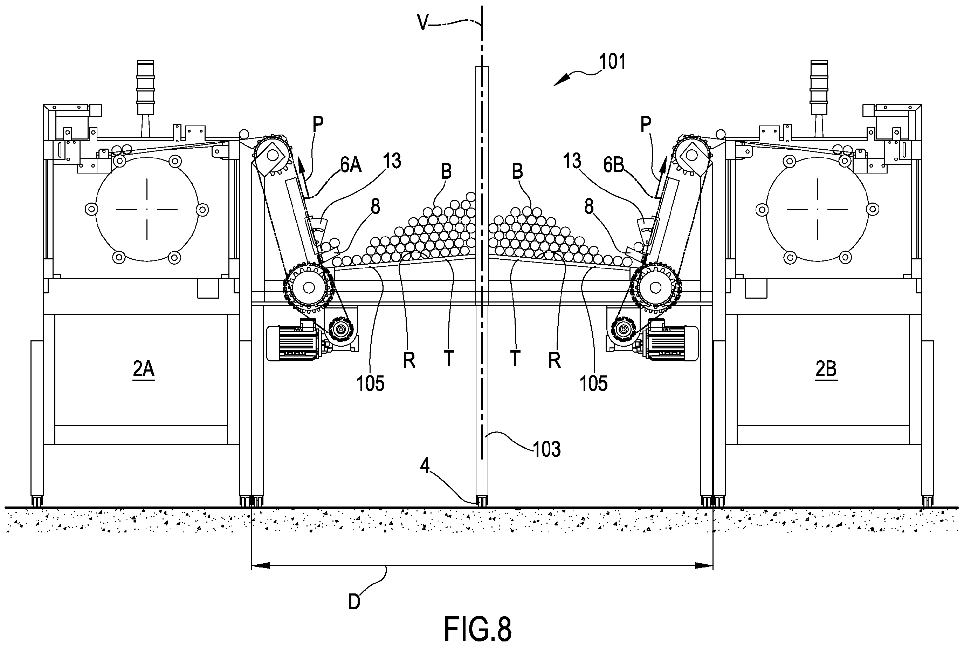

In Figure 8, another embodiment is shown of a movable magazine device 101 that is structurally and functionally identical to what has just been disclosed but is configured for being able to supply simultaneously two distinct bar loaders 2A, 2B.

The common parts or parts equivalent to what has been disclosed previously are indicated by the same reference numbers or by the same reference numbers increased by 100.

The magazine device 101 also in this case having a carriage structure provided with wheels 4, which are lockable by suitable braking systems.

The support means 105 is configured specularly with respect to a vertical median plane V of the frame structure 103, so as to define resting zones for the bars that have to be fed to the first loader 2A and for the bars that have to be fed to the second loader 2B.

The removing and transferring means 6 comprises at least one first pair of closed-loop removing units 6A fitted to a longitudinal side of the frame structure 103 (and provided with respective engaging protruding elements 8), and at least one second pair of closed-loop removing units 6B (also the second pair of closed-loop removing units 6B being provided with respective engaging protruding elements 8) that are placed on an opposite longitudinal side in a manner that is specular to the aforesaid first pair of closed-loop removing units 6A with respect to the aforesaid vertical median plane V. The frame structure 103 is geometrically shaped for being interposed between the two bar loaders 2A, 2B that are laterally contiguous and placed at a mutual distance D. In this case, the width of the frame structure 103 can be slightly less than this distance D, to enable the device 1 to be positioned correctly in the gap that mutually separates the two bar loaders 2A, 2B.

The first pair of removing units 6A and the second pair of removing units 6B are arranged symmetrically with respect to the vertical median plane V in order to be able to supply simultaneously the respective bar loaders 2A, 2B.

The operation of only the magazine device 1 disclosed in the first embodiment will be disclosed, the operation being identical to that of the device 101 with a double structure.

Once a good number of bars B has been placed on the magazine device 1 that have been removed from a magazine or storage zone, the magazine device 1 can easily be pushed manually by an operator so as to be placed alongside the bar loader 2 to be supplied with a new load of bars B.

Once the desired position of the adjusting plates 13 is set, it is possible to start the motor 11 that drives the two chain units 6.

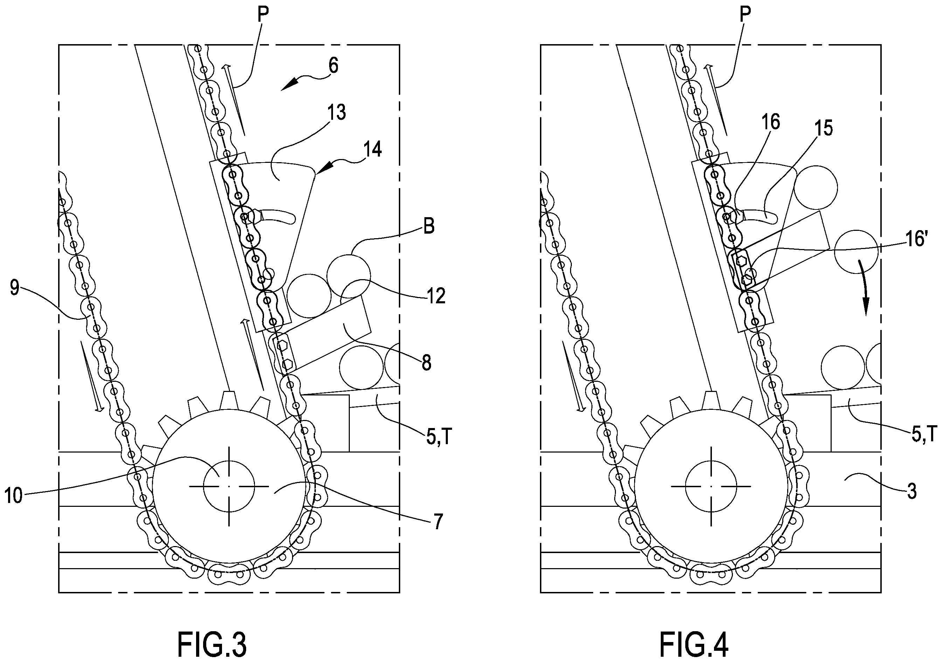

As shown in figures 3 to 6, the protruding elements 8 lift from below one or more bars B, taking the bars B upwards. During the upward advancement the bars make contact with the contrasting surfaces 14 of the adjusting plates 13 that expel the quantity of excess bars.

Once the top of the closed loop P is reached, the protruding element 8 releases the bar, by gravity, to a descending ramp provided on the loader 2 and then continues downwards along the path P to be able to remove a subsequent bar B.

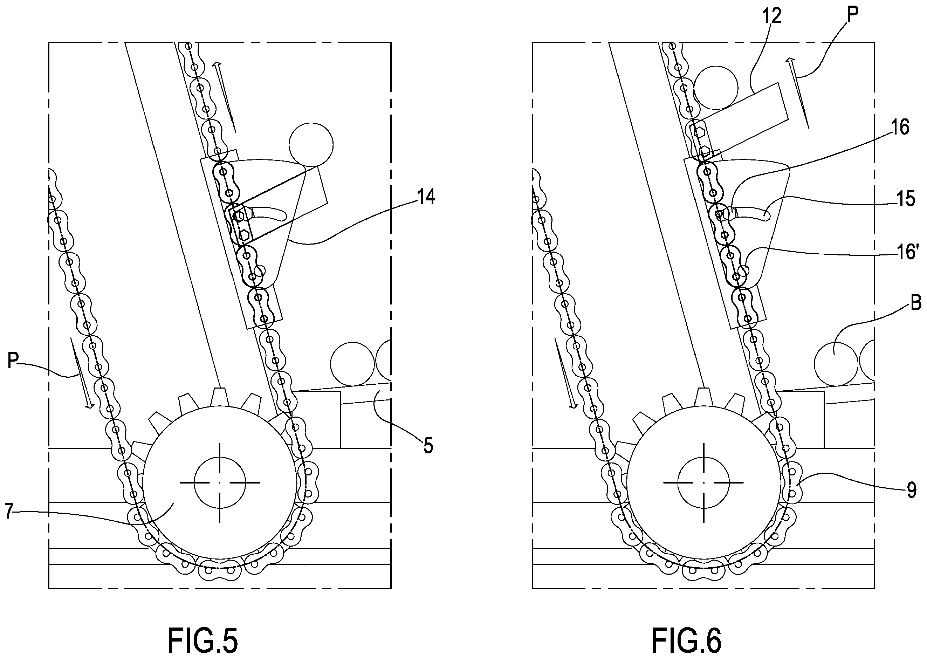

Figure 3 shows a situation in which two bars are supported simultaneously on the protruding element 8. When the protruding element 8 arrives, coming from below, near the adjusting plate 13, the contrasting surface 14 of the latter acts as an obstacle to the bar placed further inside, and on which another bar rests laterally that is intended to be sent to the underlying bundle of bars. Continuing the upward advancement, the two bars are pushed progressively outwards until the outermost bar is forced to fall downwards (as shown in Figure 4) whilst the remaining bar remains on the protruding element 8 (as shown in figures 5 and 6, to end the advancement thereof to the bar loader 2.

Naturally, the adjusting plate 13 is adjusted beforehand taking account of both the diameter of the bars B to be processed, and of the dimension of protrusion of the protruding element 8.

The presence of more than one protruding element 8 on the chain unit 6 enables the transferring frequency of the bars B to be increased, maintaining at the same time a low advancement speed of the bars B conveyed by the moving chain units 6. This makes operation smoother and more stable without undesired vibrations or oscillations of the bars B.

In all the embodiments disclosed previously, the following feature is present. The support means 5 or 105 (transverse elements T or resting plane or belt or chain flexible elements T arranged in a curve) obtained on the frame structure 3 or 103 and configured for supporting the bars B, are stationary and uncoupled from the removing and transferring means (6; 6A, 6B) which are on the other hand movable. This means that only the closed-loop flexible elements (chains or belts) of the removing units 6 have to be moved by suitable motors. As the lifting force required of the removing units 6 is the force that is suitable for lifting one bar B at a time, removing the bar B from the bundle of stationary bars B, accordingly the power of the motors required to drive the removing units 6 is reduced, with advantages from the structural point of view and in terms of the costs of the magazine device.

The significantly simplified structural configuration of the apparatus 1 entails great mechanical reliability and financially advantageous manufacturing and maintenance costs.

As can be appreciated from what has been disclosed, the movable magazine device 1 achieves all the objects disclosed above and in particular it is an effective solution for rapid and easy supplying of bar loaders in total safety for operators.

The device 1 according to the invention is versatile and of universal type, i.e. usable in combination with any type of bar loader. Further, owing to the possible double configuration, the device 101 is able to supply also two bar loaders simultaneously if desired, in this manner reducing the general costs of the plants.

It is possible to configure and size the device 1 in a desired manner in function of the applications to which the device 1 can be intended and variants on and/or additions to what has been disclosed above and illustrated in the appended drawings are possible.

## Claims

1. Movable magazine device suitable for supplying a loader (2; 2A, 2B) of bars (B) for a machine tool, comprising:
- a frame structure (3; 103) provided with movement means (4) by means of which said movable magazine device (1; 101) can be brought towards/moved away from said bar loader (2);
- support means (5; 105) obtained on said frame structure (3; 103) and configured for supporting a plurality of bars (B) intended for being transferred to said bar loader (2; 2A, 2B),
- removing and transferring means (6; 6A, 6B) fitted to said frame structure (3; 103) and movable along a closed path (P) to remove from said support means (5; 105) single bars (B) in sequence to lift the bars and transfer the bars one after the other to said bar loader (2; 2A, 2B),
**characterized in that** said movement means comprise swivel wheels (4) configured for enabling said magazine device to be advanced freely in any direction on a floor and said removing and transferring means comprises at least one removing unit (6) comprising a closed-loop flexible element and which is wound, at opposite ends, around respective circular drive elements (7), on each removing unit (6) engaging protruding elements (8) being obtained that are movable together with the respective removing unit (6) that is suitable for making contact below with a bar (B) to lift the bar (B) to a delivery height at which the bar (B) can be released to said bar loader (2), and **in that** it further comprises adjusting means (13) that is suitable for adapting said removing and transferring means (6; 6A, 6B) to the diameter or section of the bars (B) to be transferred.

2. Movable magazine device according to claim 1, wherein each closed-loop removing unit (6; 6A, 6B) comprises a chain unit (9), and said circular drive elements comprise a pair of toothed wheels (7) around which the respective chain unit (9) is wound, one of said toothed wheels (7) being driven, by a transmission shaft (10), by an electric motor (11).

3. Movable magazine device according to claim 1, wherein each closed-loop removing unit (6; 6A, 6B) is defined by a belt unit and said circular drive elements (7) comprise a pair of pulleys around which the respective belt unit is wound, one of said pulleys being driven by an electric motor (11).

4. Movable magazine device according to any one of the preceding claims, wherein said protruding elements (8) are shaped as block or plate elements and are fixed, in a distributed manner, along each closed-loop removing unit (6; 6A, 6B), and in which each protruding element (8) comprises a resting surface (12) suitable for receiving and supporting a bar (B), said resting surface (12) being tilted to carry the bar resting on the respective closed-loop removing unit (6; 6A, 6B) and prevent an accidental fall of the bar (B).

5. Movable magazine device according to any one of the preceding claims, wherein each closed-loop removing unit (6; 6A, 6B) advances along the respective closed path (P) that extends on a vertical plane, at least two closed-loop removing units (6) being provided arranged at opposite ends of said frame structure (3) for grasping at least two distal zones of each bar (B).

6. Movable magazine device according to any one of the preceding claims, wherein said adjusting means comprises one or more adjusting plates (13) each having a circular sector shape and being provided laterally with a contrasting surface (14) shaped for being positioned transversely to the advancement path of said removing and transferring means (6; 6A, 6B) to expel, from the removing and transferring means (6) moving upwards, possible excess loaded bars (B).

7. Movable magazine device according to claim 6, wherein each adjusting plate (13) is provided with slot means (15) and is connected to said frame structure (3; 103) by screw means (16) engaging said slot means (15), said slot means (15) and said screw means (16) enabling the position of the adjusting plate (13) to be adjusted so as to make said contrasting surface (14) protrude in a tilted manner and by a desired amount with respect to the path of said removing and transferring means (6; 6A, 6B) according to the diameter of the bars (B) to be transferred.

8. Movable magazine device according to any preceding claim, wherein said support means (5; 105) is defined, at the opposite ends of said frame structure (3; 103), by two or more chain elements (C) or two or more belt elements arranged according to a catenary curve configuration to support the ends of a bundle of bars (B).

9. Movable magazine device according to any one of claims 1 to 7, wherein said support means (5; 105) comprises several transverse elements (T) distributed and arranged transversely to a longitudinal axis (L) of said frame structure (3; 103) to define a resting plane (R) tilted for a bundle of bars (B), said transverse elements (T) being tilted in a manner descending to said removing and transferring means (6; 6A, 6B) for promoting the accumulation of the bars (B) near said removing and transferring means (6; 6A, 6B).

10. Movable magazine device according to claim 9, wherein the tilt of said transverse elements (T) is adjustable in a desired manner on the basis of specific needs and of the geometry of said bars (B).

11. Movable magazine device according to any preceding claim, wherein said support means (105) has a mirror configuration with respect to a vertical median plane (V) of said frame structure (103) and wherein said transferring and removing means (6) comprises at least one first pair of closed-loop removing units (6A) fitted to a longitudinal side of said frame structure (103) and provided with respective engaging protruding elements (8), and at least one second pair of closed-loop removing units (6B) provided with respective engaging protruding elements (8) and placed on an opposite longitudinal side mirroring said first pair of closed-loop removing units (6A) with respect to said vertical median plane (V), said frame structure (103) being geometrically formed for being placed between two contiguous laterally spaced bar loaders (2A, 2B), said at least one first pair of closed-loop removing units (6A) and said at least one second pair of closed-loop removing units (6B) being arranged symmetrically with respect to said vertical median plane (V) in order to be able to supply simultaneously the respective bar loaders (2A, 2B).

12. Movable magazine device according to any one of the preceding claims, wherein said movement means comprises self-propelling wheels.

## Patentansprüche

1. Bewegbare Magazinvorrichtung, die zum Versorgen einer Beladevorrichtung (2; 2A, 2B) für Stangen (B) für eine Werkzeugmaschine geeignet ist, die umfasst:
- eine Rahmenstruktur (3; 103), die mit einem Bewegungsmittel (4) versehen ist, mittels welchem die bewegbare Magazinvorrichtung (1; 101) zu der Stangenbeladevorrichtung (2) gebracht/von ihr wegbewegt werden kann;
- ein Tragmittel (5; 105), das auf der Rahmenstruktur (3; 103) erhalten wird und konfiguriert ist, um eine Vielzahl von Stangen (B) zu tragen, die dazu bestimmt sind, zu der Stangenbeladevorrichtung (2; 2A, 2B) transferiert zu werden,
- Entnahme- und Transfermittel (6; 6A, 6B), die auf die Rahmenstruktur (3; 103) gebaut sind und entlang eines geschlossenen Weges (P) bewegbar sind, um von dem Tragmittel (5; 105) einzelne Stangen (B) nacheinander zu entnehmen, um die Stangen zu heben und die Stangen eine nach der anderen zu der Stangenbeladevorrichtung (2; 2A, 2B) zu transferieren,
**dadurch gekennzeichnet, dass** das Bewegungsmittel Schwenkräder (4) umfasst, die konfiguriert sind, um es der Magazinvorrichtung zu ermöglichen, frei in jede Richtung auf einem Boden vorwärts gefahren zu werden, und das Entnahme- und Transfermittel mindestens eine Entnahmeeinheit (6) umfasst, die ein biegsames Endloselement umfasst, und das an entgegengesetzten Enden um jeweilige kreisförmige Antriebselemente (7) auf jeder Entnahmeeinheit (6) gewickelt ist, die in vorragende Elemente (8) eingreifen, die erhalten werden, die miteinander mit der jeweiligen Entnahmeeinheit (6) bewegbar sind, die geeignet ist, um unterhalb mit einer Stange (B) zu berühren, um die Stange (B) zu einer Lieferhöhe zu heben, an der die Stange (B) zu der Stangenbeladevorrichtung (2) freigegeben werden kann, und das weiter ein Einstellmittel (13) umfasst, das zum Anpassen des Entnahme- und Transfermittels (6; 6A, 6B) an den Durchmesser oder Querschnitt der zu transferierenden Stangen (B) geeignet ist.

2. Bewegbare Magazinvorrichtung nach Anspruch 1, wobei jede Endlos-Entnahmeeinheit (6; 6A, 6B) eine Ketteneinheit (9) umfasst, und die kreisförmigen Antriebselemente ein Paar von Zahnrädern (7) umfassen, um die die jeweilige Ketteneinheit (9) gewickelt ist, wobei eines der Zahnräder (7) von einer Getriebewelle (10) von einem Elektromotor (11) angetrieben ist.

3. Bewegbare Magazinvorrichtung nach Anspruch 1, wobei jede Endlos-Entnahmeeinheit (6; 6A, 6B) von einer Riemeneinheit definiert ist, und die kreisförmigen Antriebselemente (7) ein Paar von Scheiben umfassen, um die die jeweilige Riemeneinheit gewickelt ist, wobei eine der Scheiben von einem Elektromotor (11) angetrieben ist.

4. Bewegbare Magazinvorrichtung nach einem der vorstehenden Ansprüche,
wobei die vorragenden Elemente (8) als Block- oder Plattenelemente geformt sind und auf eine verteilte Art entlang jeder Endlos-Entnahmeeinheit (6; 6A, 6B) befestigt sind, und wobei jedes vorragende Element (8) eine Auflageoberfläche (12) umfasst, die zum Aufnehmen und Tragen einer Stange (B) geeignet ist, wobei die Auflageoberfläche (12) gekippt ist, um die Stange zu tragen, die auf der jeweiligen Endlos-Entnahmeeinheit (6; 6A, 6B) aufliegt, und ein versehentliches Herunterfallen der Stange (B) zu verhindern.

5. Bewegbare Magazinvorrichtung nach einem der vorstehenden Ansprüche, wobei sich jede Endlos-Entnahmeeinheit (6; 6A, 6B) entlang des jeweiligen geschlossenen Weges (P), der sich auf einer vertikalen Ebene erstreckt, fortbewegt, wobei mindestens zwei Endlos-Entnahmeeinheiten (6) an entgegengesetzten Enden der Rahmenstruktur (3) zum Ergreifen von mindestens zwei distalen Zonen jeder Stange (B) eingerichtet bereitgestellt sind.

6. Bewegbare Magazinvorrichtung nach einem der vorstehenden Ansprüche, wobei das Einstellmittel eine oder mehrere Einstellplatten (13) umfasst, die jeweils eine Kreissektorform aufweisen und seitlich mit einer kontrastierenden Oberfläche (14) versehen sind, die geformt ist, um quer zu dem Fortbewegungsweg des Entnahme- und Transfermittels (6; 6A, 6B) positioniert zu sein, um mögliche überschüssige geladene Stangen (B) von dem Entnahme-und Transfermittel (6), das sich nach oben bewegt, auszustoßen.

7. Bewegbare Magazinvorrichtung nach Anspruch 6, wobei jede Einstellplatte (13) mit einem Schlitzmittel (15) versehen und mit der Rahmenstruktur (3; 103) durch Schraubmittel (16), die in die Schlitzmittel (15) eingreifen, verbunden ist, wobei es die Schlitzmittel (15) und die Schraubmittel (16) ermöglichen, die Position der Einstellplatte (13) derart einzustellen, dass die kontrastierende Oberfläche (14) auf eine gekippte Art und um eine gewünschte Menge in Bezug auf den Weg des Entnahme- und Transfermittels (6; 6A, 6B) gemäß dem Durchmesser der zu transferierenden Stangen (B) vorragt.

8. Bewegbare Magazinvorrichtung nach einem vorstehenden Anspruch, wobei das Tragmittel (5; 105) an den entgegengesetzten Enden der Rahmenstruktur (3; 103) von zwei oder mehreren Kettenelementen(C) oder zwei oder mehreren Riemenelementen, die gemäß einer Kettenlinienkonfiguration eingerichtet sind, um die Enden eines Bündels von Stangen (B) zu tragen, definiert ist.

9. Bewegbare Magazinvorrichtung nach einem der Ansprüche 1 bis 7, wobei das Tragmittel (5; 105) mehrere Querelemente (T) umfasst, die verteilt und quer zu einer Längsachse (L) der Rahmenstruktur (3; 103) eingerichtet sind, um eine Auflageebene (R) zu definieren, die für ein Bündel von Stangen (B) gekippt ist, wobei die Querelemente (T) auf eine Art, die zu dem Entnahme- und Transfermittel (6; 6A, 6B) abfällt, gekippt ist, um das Ansammeln der Stangen (B) nahe an dem Entnahme- und Transfermittel (6; 6A, 6B) zu fördern.

10. Bewegbare Magazinvorrichtung nach Anspruch 9, wobei das Kippen der Querelemente (T) auf eine gewünschte Art auf der Basis spezifischer Erfordernisse der Geometrie der Stangen (B) einstellbar ist.

11. Bewegbare Magazinvorrichtung nach einem vorstehenden Anspruch, wobei das Tragmittel (105) eine Spiegelkonfiguration in Bezug zu einer vertikalen mittleren Ebene (V) der Rahmenstruktur (103) aufweist, und wobei das Transfer- und Entnahmemittel (6) mindestens ein erstes Paar von Endlos-Entnahmeeinheiten (6A) umfasst, das an eine Längsseite der Rahmenstruktur (103) angebaut und mit jeweiligen eingreifenden vorragenden Elementen (8) versehen ist, und mindestens ein zweites Paar von Endlos-Entnahmeeinheiten (6B), das mit jeweiligen eingreifenden vorragenden Elementen (8) versehen und auf einer entgegengesetzten Längsseite platziert ist, die das erste Paar von Endlos-Entnahmeeinheiten (6A) in Bezug auf die vertikale mittleren Ebene (V) widerspiegelt, wobei die Rahmenstruktur (103) geometrisch geformt ist, um zwischen zwei aneinandergrenzenden, seitlich beabstandeten Stangenbeladevorrichtungen (2A, 2B) platziert zu sein, wobei mindestens ein erstes Paar von Endlos-Entnahmeeinheiten (6A) und mindestens ein zweites Paar von Endlos-Entnahmeeinheiten (6B) symmetrisch in Bezug zu der vertikalen mittleren Ebene (V) eingerichtet sind, um fähig zu sein, die jeweiligen Stangenbeladevorrichtungen (2A, 2B) gleichzeitig zu versorgen.

12. Bewegbare Magazinvorrichtung nach einem der vorstehenden Ansprüche, wobei das Bewegungsmittel selbstfahrende Räder umfasst.

## Revendications

1. Dispositif de magasin mobile approprié pour alimenter un chargeur (2 ; 2A, 2B) de barres (B) pour une machine-outil, comprenant :
- une structure de cadre (3 ; 103) pourvue de moyens de déplacement (4) au moyen desquels ledit dispositif de magasin mobile (1 ; 101) peut être rapproché/éloigné dudit chargeur de barres (2) ;
- des moyens de support (5 ; 105) obtenus sur ladite structure de cadre (3 ; 103) et conçus pour supporter une pluralité de barres (B) destinées à être transférées vers ledit chargeur de barres (2 ; 2A, 2B),
- des moyens de retrait et de transfert (6 ; 6A, 6B) fixés à ladite structure de cadre (3 ; 103) et mobiles le long d'une trajectoire fermée (P) pour retirer desdits moyens de support (5 ; 105) des barres individuelles (B) en séquence pour soulever les barres et transférer les barres l'une après l'autre vers ledit chargeur de barres (2 ; 2A, 2B),
**caractérisé en ce que** lesdits moyens de déplacement comprennent des roues pivotantes (4) conçues pour permettre audit dispositif de magasin d'être avancé librement dans n'importe quelle direction sur un sol et ledit moyen de retrait et de transfert comprend au moins une unité de retrait (6) comprenant un élément flexible en boucle fermée et qui est enroulé, au niveau d'extrémités opposées, autour d'éléments d'entraînement circulaires (7) respectifs, sur chaque unité de retrait (6) mettant en prise des éléments en saillie (8) étant obtenus qui sont mobiles conjointement avec l'unité de retrait (6) respective qui est appropriée pour établir un contact en dessous avec une barre (B) pour soulever la barre (B) jusqu'à une hauteur de distribution à laquelle la barre (B) peut être délivrée audit chargeur de barres (2), et **en ce qu'**il comprend en outre un moyen d'ajustement (13) qui est approprié pour adapter ledit moyen de retrait et de transfert (6 ; 6A, 6B) au diamètre ou à la section des barres (B) devant être transférées.

2. Dispositif de magasin mobile selon la revendication 1, dans lequel chaque unité de retrait en boucle fermée (6 ; 6A, 6B) comprend une unité de chaîne (9), et lesdits éléments d'entraînement circulaires comprennent une paire de roues dentées (7) autour desquelles l'unité de chaîne (9) respective est enroulée, l'une desdites roues dentées (7) étant entraînée, par un arbre de transmission (10), par un moteur électrique (11).

3. Dispositif de magasin mobile selon la revendication 1, dans lequel chaque unité de retrait en boucle fermée (6 ; 6A, 6B) est définie par une unité de courroie et lesdits éléments d'entraînement circulaires (7) comprennent une paire de poulies autour desquelles l'unité de courroie respective est enroulée, l'une desdites poulies étant entraînée par un moteur électrique (11).

4. Dispositif de magasin mobile selon l'une quelconque des revendications précédentes, dans lequel lesdits éléments en saillie (8) sont façonnés sous forme d'éléments de type blocs ou plaques et sont fixés, d'une manière répartie, le long de chaque unité de retrait en boucle fermée (6 ; 6A, 6B), et dans lequel chaque élément en saillie (8) comprend une surface de repos (12) appropriée pour recevoir et supporter une barre (B), ladite surface de repos (12) étant inclinée pour porter la barre reposant sur l'unité de retrait en boucle fermée (6 ; 6A, 6B) respective et empêcher une chute accidentelle de la barre (B).

5. Dispositif de magasin mobile selon l'une quelconque des revendications précédentes, dans lequel chaque unité de retrait en boucle fermée (6 ; 6A, 6B) avance le long de la trajectoire fermée (P) respective qui s'étend sur un plan vertical, au moins deux unités de retrait en boucle fermée (6) étant prévues, agencées au niveau d'extrémités opposés de ladite structure de cadre (3) pour saisir au moins deux zones distales de chaque barre (B).

6. Dispositif de magasin mobile selon l'une quelconque des revendications précédentes, dans lequel ledit moyen d'ajustement comprend une ou plusieurs plaques d'ajustement (13) ayant chacune une forme de secteur circulaire et étant pourvue latéralement d'une surface contrastante (14) façonnée pour être positionnée transversalement à la trajectoire d'avancement dudit moyen de retrait et de transfert (6 ; 6A, 6B) pour expulser, du moyen de retrait et de transfert (6) se déplaçant vers le haut, d'éventuelles barres (B) chargées en excès.

7. Dispositif de magasin mobile selon la revendication 6, dans lequel chaque plaque d'ajustement (13) est pourvue de moyens formant fente (15) et est reliée à ladite structure de cadre (3 ; 103) par des moyens de vissage (16) se mettant en prise avec lesdits moyens formant fente (15), lesdits moyens formant fente (15) et lesdits moyens de vissage (16) permettant à la position de la plaque d'ajustement (13) d'être ajustée de sorte à faire saillir ladite surface contrastante (14) d'une manière inclinée et d'une quantité souhaitée par rapport à la trajectoire dudit moyen de retrait et de transfert (6 ; 6A, 6B) en fonction du diamètre des barres (B) devant être transférées.

8. Dispositif de magasin mobile selon l'une quelconque des revendications précédentes, dans lequel ledit moyen de support (5 ; 105) est défini, au niveau des extrémités opposées de ladite structure de cadre (3 ; 103), par deux éléments de chaîne (C) ou plus ou deux éléments de courroie ou plus agencés selon une configuration de courbe caténaire pour supporter les extrémités d'un groupe de barres (B).

9. Dispositif de magasin mobile selon l'une quelconque des revendications 1 à 7, dans lequel ledit moyen de support (5 ; 105) comprend plusieurs éléments transversaux (T) répartis et agencés de manière transversale à un axe longitudinal (L) de ladite structure de cadre (3 ; 103) pour définir un plan de repos (R) incliné pour un groupe de barres (B), lesdits éléments transversaux (T) étant inclinés d'une manière descendante par rapport audit moyen de retrait et de transfert (6 ; 6A, 6B) pour favoriser l'accumulation des barres (B) près dudit moyen de retrait et de transfert (6 ; 6A, 6B).

10. Dispositif de magasin mobile selon la revendication 9, dans lequel l'inclinaison desdits éléments transversaux (T) est ajustable d'une manière souhaitée sur la base de besoins spécifiques et de la géométrie desdites barres (B).

11. Dispositif de magasin mobile selon l'une quelconque des revendications précédentes, dans lequel ledit moyen de support (105) a une configuration de miroir par rapport à un plan médian vertical (V) de ladite structure de cadre (103) et dans lequel ledit moyen de transfert et de retrait (6) comprend au moins une première paire d'unités de retrait en boucle fermée (6A) fixée à un côté longitudinal de ladite structure de cadre (103) et pourvue d'éléments de mise en prise en saillie (8) respectifs, et au moins une seconde paire d'unités de retrait en boucle fermée (6B) pourvue d'éléments de mise en prise en saillie (8) respectifs et placée sur un côté longitudinal opposé représentant en miroir ladite première paire d'unités de retrait en boucle fermée (6A) par rapport audit plan médian vertical (V), ladite structure de cadre (103) étant formée de manière géométrique pour être placée entre deux chargeurs de barres (2A, 2B) espacés latéralement contigus, ladite au moins une première paire d'unités de retrait en boucle fermée (6A) et ladite au moins une seconde paire d'unités de retrait en boucle fermée (6B) étant agencées de manière symétrique par rapport audit plan médian vertical (V) afin de pouvoir alimenter simultanément les chargeurs de barres (2A, 2B) respectifs.

12. Dispositif de magasin mobile selon l'une quelconque des revendications précédentes, dans lequel ledit moyen de déplacement comprend des roues automotrices.
